(19) Europäisches Patentamt
European Patent Office
Office européen des brevets

(11) **EP 4 670 922 A1**

(12) **EUROPEAN PATENT APPLICATION**
published in accordance with Art. 153(4) EPC

(43) Date of publication:
**31.12.2025 Bulletin 2026/01**

(21) Application number: **23757827.3**

(22) Date of filing: **22.06.2023**

(51) International Patent Classification (IPC):
**B25J 9/00** (2006.01)    **A61H 1/02** (2006.01)

(52) Cooperative Patent Classification (CPC):
**A61H 1/02; B25J 9/00**

(86) International application number:
**PCT/KR2023/008645**

(87) International publication number:
**WO 2024/177205 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.02.2023 KR 20230024219**

(71) Applicant: Chung-Ang University Industry-
Academic
Cooperation Foundation
Seoul 06974 (KR)

(72) Inventors:
• LEE, Giuk
  Gwangmyeong-si, Gyeonggi-do 14306 (KR)
• PARK, Sungjin
  Seoul 08816 (KR)
• MOON, Junyoung
  Seoul 06969 (KR)
• PARK, Juneil
  Seoul 08203 (KR)

(74) Representative: ZBM Patents - Zea, Barlocci &
Markvardsen
Rambla de Catalunya, 123
08008 Barcelona (ES)

(54) **LIGHTWEIGHT WEARABLE SUIT BASED ON BIOMIMETICS AND METHOD FOR DESIGNING WEARABLE SUIT**

(57)    The present disclosure relates to relates to a biomimetic lightweight wearable suit and wearable suit design method, particularly to a biomimetic lightweight wearable suit that includes a suit portion that covers a body region from the knee to the sole of the foot; a force transmission pattern portion that surrounds around joints and muscles by mimicking a tendon to disperse a force of an actuator to a garment and a body; and an anchor point portion that is designed to surround a joint by mimicking a ligament.

[FIG. 7]

## Description

BACKGROUND

Technical Field

The present disclosure relates to a biomimetic lightweight wearable suite and wearable suit design method.

Related Art

Walking is the most basic movement in human life. People have always been interested in the development of devices that can improve walking ability. This has led to the development of various wearable devices that can improve the walking efficiency of the wearer.

Over the past few decades, many researchers have developed various wearable devices to improve walking efficiency. These studies have produced notable results. The ankle is the joint that generates the highest amount of mechanical output of all human joints. Therefore, many researchers aimed to develop customized assistive devices for the ankle joint.

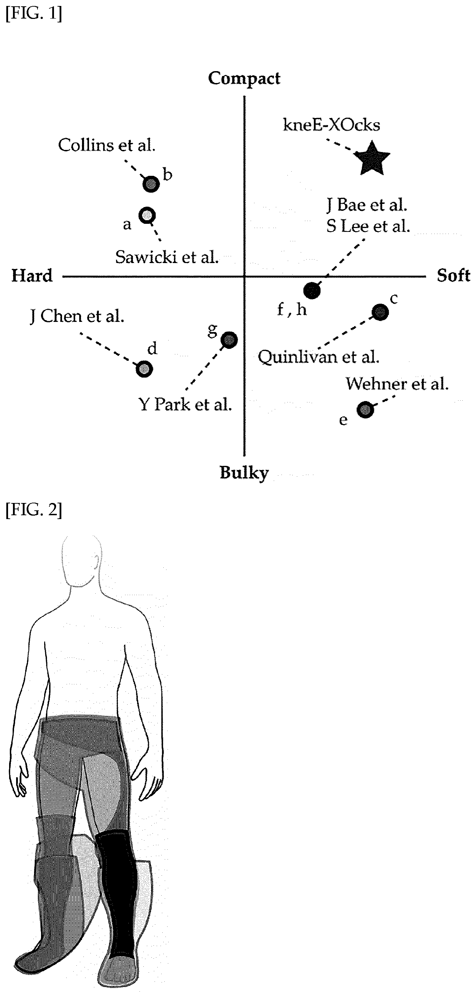

As shown in FIG. 1C, a pneumatic exoskeletone used to assist the ankle achieved a 6% reduction in metabolic cost while walking with a load. Collins et al. achieved a 7.2% reduction in metabolic cost while using a non-powered exoskeleton adopted to assist the ankle (See (b) of FIG. 1C). Quinlivanet al. achieved an approximately 23% reduction in metabolic cost with walking assisted by a multi-joint soft exosuit (See (c) of FIG. 1C).

Recently, various research groups have presented data that justifies a reduction in metabolic cost, improves stability of the wearer, and prevents injuries. Recently, research is being conducted on functions that not only reduces metabolic cost, but also improve walking stability of the wearer or prevent injuries.

Research have been conducted to mitigate gait disorders in people with post-stroke sequelae through assist optimization of prior exosuits for the ankle. Further, a design for a foot exosuit that converts the operating system between a single motor and a dual motor has been proposed (See (d) of FIG, 1C).

In the future, theses wearable assistive devices become commonly used in daily life. However, despite recent technological advances, it is still not easy to use wearable devices. Most wearable devices are exoskeletons that consist of a rigid structure attached to the body in a direction parallel to the joint.

The structure of these exoskeletons is heavy and bulky, which leads to discomfort and increased energy consumption due to increased inertia during walking. This makes it difficult to use the exoskeletons in daily life. Further, when there is misalignment between the joints of the exoskeleton and the human body, the exoskeleton can apply incorrect forces to the joint, which can interfere with natural movement.

Recent studies have shown that there are still some drawbacks to exoskeletons, even with advanced designs thereof. Exosuits are a clothes-like design and has recently been gaining attention in the wearable device field. The exosuit made of cloth is lightweight and has a simple structure, making it easy to wear. In addition, this does not restrict wearer's movement in any way. The exosuit can reduce a metabolic penalty due to its lightweight feature that is lighter than the exoskeleton. In the light of this advantage, the exosuit is such a wearable device that is suitable for using in daily life.

However, despite these advantages, the exosuit still has a drawback as a wearable device. It can be easily deform when receiving assist forces, which may not deliver enough forces to a target joint.

Various studies have been conducted to mitigate a deformation issue. Wehner et al. reduced power loss by using many fixation points to reduce garment deformation (See (c) of FIG. 1C). However, this method somewhat offsets the advantages of the existing exoskeleton such as lightness, simple structure and ease of wearing. Asbeck et al. designed an ankle-assisting exoskeleton that distributes force in multiple directions from the pelvis to the ankle to minimize suit deformation as an initial version. The latest version of the ankle exosuit as shown in (f) of FIG. 1C mitigated the deformation issue by using a special footwear that has additional clothing worn around the waist and an additional anchor point for support. This design can maximize the strength of the exosuit at the most-maximum, but requires additional anchor points other than assistive ankle, which increases the weight and complexity of the exosuit. As going down from the waist to the thigh, knee, and ankle, the impact of body weight on the body increases. Therefore, reducing the weight and simplifying the structure of the ankle assistive suit is a very important consideration.

A method for preventing deformation can be classified into three categories. As shown in FIG. 1A, there are a method of adding hard components and a method of using both. This confirms the need for the development of soft and compact exosuits.

To mitigate the deformation issue of exoskeletons, a bio-inspired pattern methodology is implemented in the garment design. Human gait has evolved over more than 500,000 years since the Australopithecus era. During this time, the human body structure has acquired efficient bipedal locomotion.

Asbeck et al. have implemented a light and efficient exoskeleton designed based on the understanding of how humans walk. By imitating the wearer's skeletal structure and the ankle joint region of the biological limb, a more transparent, safer, and more effective architectural design of the exoskeleton can be achieved. Park et al. emulated the musculoskeletal system, composed of muscles, tendons, and ligaments, and provided sufficient fixation force to the suit without a rigid frame (See (g) of Fig. 1C). Yang et al. developed a passive hip exoskeleton to improve running efficiency based on the dynamic action of the hip flexor ligaments during running. Recently, studies are being conducted to utilize biologically inspired methods in not only exoskeleton design but also assistive strategies. Nuckols et al. measured muscle mechanics during walking, as shown in (h) of Fig. 1C, and developed assistive strategies based on the measurements.

In other words, since the exosuit, a wearable robot developed in the form of clothing, was presented, robots have been developed in various forms and their effects have been verified on various joints. However, most exosuits have been developed with a focus on the approval and effect of assistive force through actuators rather than clothing, and the form of the clothing itself has not been performed. As a result, many considerations have not been made about the weight and wearing method of the system, which are important in terms of the wearable robot.

The aforementioned conventional technologies have been developed to apply large assistive forces to the wearer and thus the weight of the system is heavy or a single element wears a variety of parts in a complex manner. However, such a form according to these technologies has the limitations of taking a long time to wear or worsening the wearing comfort.

SUMMARY

Technical Problem

Therefore, the present disclosure is contrived to solve conventional problems as described above. According to an embodiment of the present disclosure, it aims to provide a biomimetic lightweight wearable suit and wearable suit design method, which expect advantageous effects such as lightweighting and system simplification and the like based on the biomimetic garment design methodology.

According to an embodiment of the present disclosure, it aims to provide a biomimetic lightweight wearable suit and wearable suit design method in which an ankle assistive wearable suit that is developed in the form of a single garment, and related design is modeled on the human lower extremity musculoskeletal system, particularly the portion that simulates muscles, tendons, and ligaments.

According to an embodiment of the present disclosure, it aims to provide a biomimetic lightweight wearable suit and wearable suit design method in which the design was developed to extensively mimic the knees and ankles. The suit is designed by reflecting the movement and shape of bones to enable easier wearing. At this time, the design pursues the maximization of the wearing comfort and the assist efficiency by applying different garment materials to the suit according to the type of the musculoskeletal system that is mimicked.

Further, according to an embodiment of the present disclosure, it aims to provide a biomimetic lightweight wearable suit and wearable suit design method, which minimize the volume and weight of the wearable suit designed through biomimicry, thereby enabling the wearing of a wearable robot under ordinary clothing.

In addition, according to an embodiment of the present disclosure, it aims to provide a biomimetic lightweight wearable suit and wearable suit design method in which the shape and characteristics of each component of the human musculoskeletal system are identified, and the function and mechanism of each component according to walking motion are analyzed to select the material and component arrangement of the garment based on this.

According to an embodiment of the present disclosure, it aims to provide a biomimetic lightweight wearable suit and wearable suit design method. In the case of mimicking the ligaments responsible for the stability of the joints, a design that surrounds each joint is applied. In the case of the applied material, a design focuses on using a non-stretchable garment material in the form of a strap to ensure a secure fit for the wearer in situations where assistive force is applied to the garment. In the case of mimicking the tendons, a design that surrounds around the joints and muscles so as to disperse the force of the actuator to the garment and the body and a non-stretchable material in the form of plane is applied. Furthermore, for other regions, a material that has good stretchability and moisture permeability is applied.

Meanwhile, technical objects to be achieved in the present invention are not limited to the aforementioned technical objects, and other technical objects, which are not mentioned above, will be apparently understood to a person having ordinary skill in the art from the following description.

Technical Solution

According to a first aspect of the present disclosure, it can be achieved by a biomimetic light wearable suit that includes a suit portion that covers a body region from the knee to the sole of the foot; a force transmission pattern portion that surrounds around joints and muscles by mimicking a tendon to disperse a force of an actuator to a garment and a body; and an anchor point portion that is designed to surround a joint by mimicking a ligament.

The force transmission pattern portion is characteristically made of an inelastic material.

The suit portion characteristically includes an opening for the knee and possess flexibility and elasticity.

The suit portion characteristically includes an opening for a heel, covers body region from the knee to the sole of the foot and a form, such as knee-high socks or stockings.

Further, the force transmission pattern portion characteristically has a Y-shaped pattern that starts at the back of the knee and extends along the calf to an ankle.

The anchor point portion characteristically includes a knee anchor point that is fixed around the knee to catch a downward pulling force during walking and prevent the suit portion from slipping.

Further, the anchor point portion characteristically further includes an ankle anchor point that is fixed around the sole of the foot and the ankle to prevent the suit portion from being forcibly removed.

The anchor point portion is characteristically made of an inelastic material.

Further, the force transmission pattern portion characteristically further includes a fixation support that is connected to both ends at one side to wrap and fix the ankle.

The force transmission pattern portion characteristically includes a connection portion that is fixed to the ankle point and aligned along the calf in a length direction, and a strap that is fixed to a top end of the connection portion to wrap a top end of the knee.

According to a second aspect of the present disclosure, it can be achieved by a wearable suit design method that includes steps of: designing a suit portion that covers a body region from the knee to the sole of the foot and possesses flexibility and elasticity; designing a force transmission pattern portion that is made of an inelastic material and surrounds around joints and muscles by mimicking a tendon to disperse a force of an actuator to a garment and a body; and designing an anchor point portion that is made of an inelastic material and designed to surround a joint by mimicking a ligament.

The suit portion is characteristically designed to include an opening for a heel, cover a body region from the knee to the sole of the foot three dimensionally and have a form such as knee-high socks and stockings.

Further, the force transmission portion is characteristically designed to have a Y-shaped pattern that starts at the back of the knee and extends along the calf to an ankle.

The anchor point portion is characteristically designed to have a knee anchor point that is fixed around the knee to catch a downward pulling force during walking and prevent the suit portion from slipping and an ankle anchor point that is fixed around the sole of the foot and the ankle to prevent the suit portion from being forcibly removed

Further, the knee anchor point is characteristically designed to receive a force generated from the force transmission pattern portion and have a front side made of an inelastic material.

The ankle anchor point is characteristically designed to wrap the ankle, serve as an anchor point without interfering with movement that occurs in an ankle joint and withstand an upward pulling force generated from the force transmission pattern portion.

Advantageous Effects

According to a biomimetic lightweight wearable suit and wearable suit design method in accordance with an embodiment of the present disclosure, it can be expected to have advantageous effects such as lightweighting and system simplification based on the biomimetic garment design methodology.

According to a biomimetic lightweight wearable suit and wearable suit design method in accordance with an embodiment of the present disclosure, the design was developed to extensively mimic the knees and ankles. The suit is designed by reflecting the movement and shape of bones to enable easier wearing. At this time, the design pursues the maximization of the wearing comfort and the assist efficiency by applying different garment materials to the suit according to the type of the musculoskeletal system that is mimicked.

Further, according to a biomimetic lightweight wearable suit and wearable suit design method in accordance with an embodiment of the present disclosure, it can be expected to have advantageous effects on minimization of the volume and weight of the wearable suit designed through biomimicry, thereby enabling the wearing of a wearable robot under ordinary clothing.

In addition, according to a biomimetic lightweight wearable suit and wearable suit design method in accordance with an embodiment of the present disclosure, it is capable of identifying the shape and characteristics of each component of the human musculoskeletal system, analyzing the function and mechanism of each component according to walking motion, thereby selecting the material and component layout of the garment based on this.

According to a biomimetic lightweight wearable suit and wearable suit design method in accordance with an embodiment of the present disclosure, in the case of mimicking the ligaments, a design that surrounds each joint is applied. In the case of the applied material, a design focuses on using a non-stretchable garment material in the form of a strap to ensure a secure fit for the wearer in situations where assistive force is applied to the garment. In the case of mimicking the tendons, a design that surrounds around the joints and muscles so as to disperse the force of the actuator to the garment and the body and a non-stretchable material in the form of plane is applied. Furthermore, for other regions, a material that has good stretchability and moisture permeability is applied.

Meanwhile, advantageous effects to be obtained in the present disclosure are not limited to the aforementioned effects, and other effects, which are not mentioned above, will be apparently understood to a person having ordinary skill in the art from the following description.

BRIEF DESCRIPTION OF THE DRAWINGS

The accompanying drawings of this specification exemplify a preferred embodiment of the present disclosure, the spirit of the present disclosure will be more clearly understood from the following detailed description taken in conjunction with the accompanying drawings, and thus it will be understood that the present disclosure is not limited to only contents illustrated in the accompanying drawings;

FIG. 1 shows a strength and volume distribution of current wearable ankle robots (This image confirms the need for new ankle robots that are soft and compact, like kneE-XOcks),

FIG. 2 shows a compact design of kneE-XOcks compared to existing wearable ankle robots (This can be seen in the illustration that compares the volume of the kneE-XOcks to that of current wearable ankle robots),

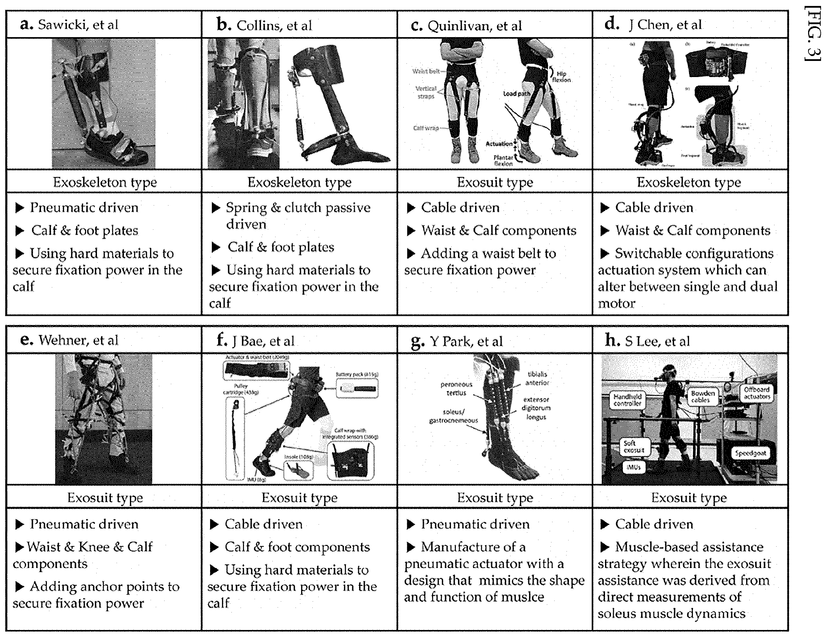

FIG. 3 shows a table that analyzes and classifies the characteristics of existing wearable ankle robots (kneE-XOcks have a higher assistive effect than existing wearable robots, which results in a need for hard plates or additional fixation points on many components),

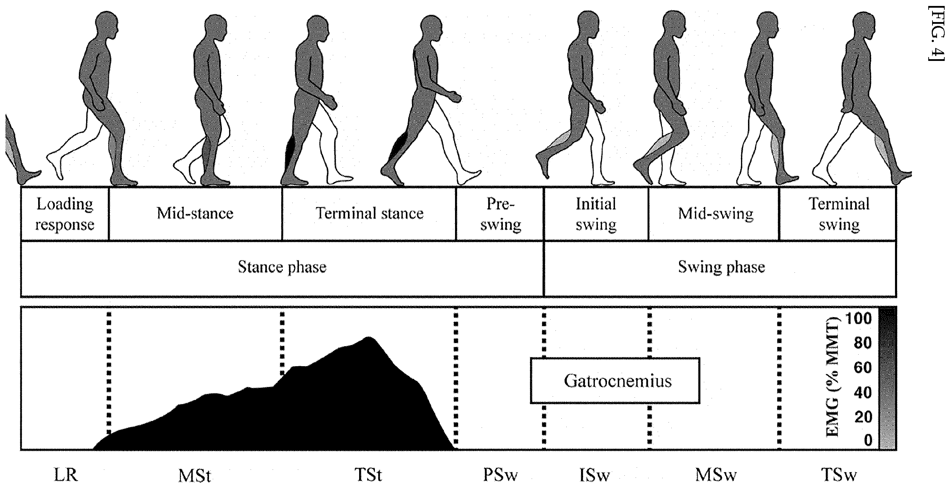

FIG. 4 shows muscle activity of the gastrocnemius muscle for each section (Gastrocnemius muscle is most active in sections from terminal swing to pre-swing and performs plantar flexion to move the body forward),

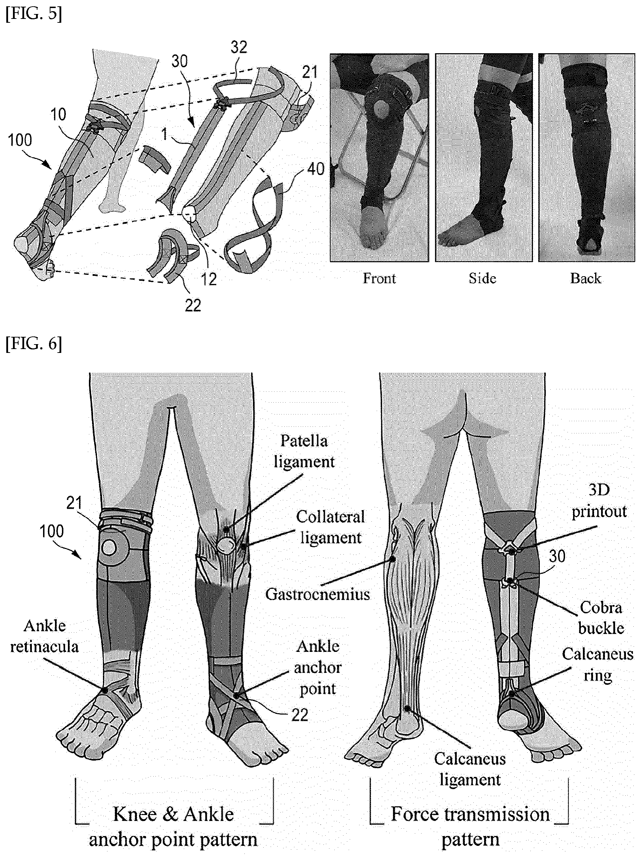

FIG. 5 shows the overall configuration of kneE-XOcks from the knee to the sole of the foot ((a) each part is a separate garment, so that the wearer can pull on the kneE-XOcks quickly and comfortably just like putting on socks, and (b) as a result, the kneE-XOcks can have a thinner and lighter design),

FIG.6 shows a fixation point pattern and a force transmission pattern inspired by muscles, ligaments and retinacula (Theses patterns serves to support and transmit forces of kneE-XOcks. The force transmission pattern mimics the function and shape of the gastrocnemius muscle and performs plantar flexion at an ankle joint. The knee fixation point and the ankle fixation point prevent kneE-XOcks from being released and transmit a force to each correct position. The knee fixation point mimics the function and shape of the ligaments around the patella, and the ankle fixation point simulates the function and shape of the ankle retinacula),

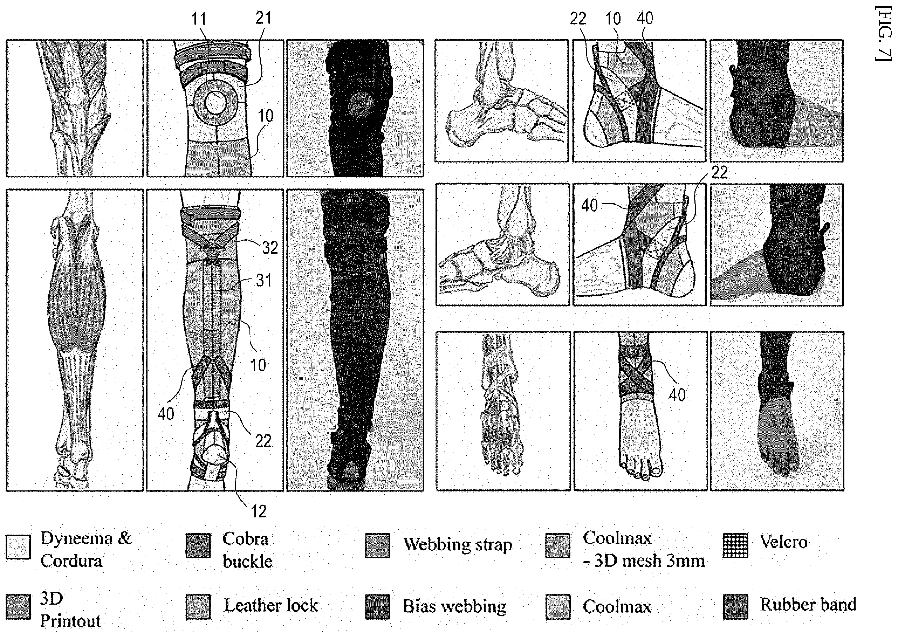

FIG.7 shows components of kneE-XOcks (The components are designed based on biomimetic human anatomy and made from 11 types of materials that mimic the characteristics of human anatomy. Dyneema and Cordura are used in components that support and transmit the force of the kneE-XOcks due to their high stigfness. Coolmax and 3D mesh enhance the comfort of wearing the kneE-XOcks by providing high breathability and cushioning. Cobra buckle, ladder lock, webbing strap and bias webbing are used to connect the respective components of the kneE-XOcks, enabling them to be assembled into a single garment. Velcro and elastic bands are used to minimize the unnecessary excess of the kneE-XOcks),

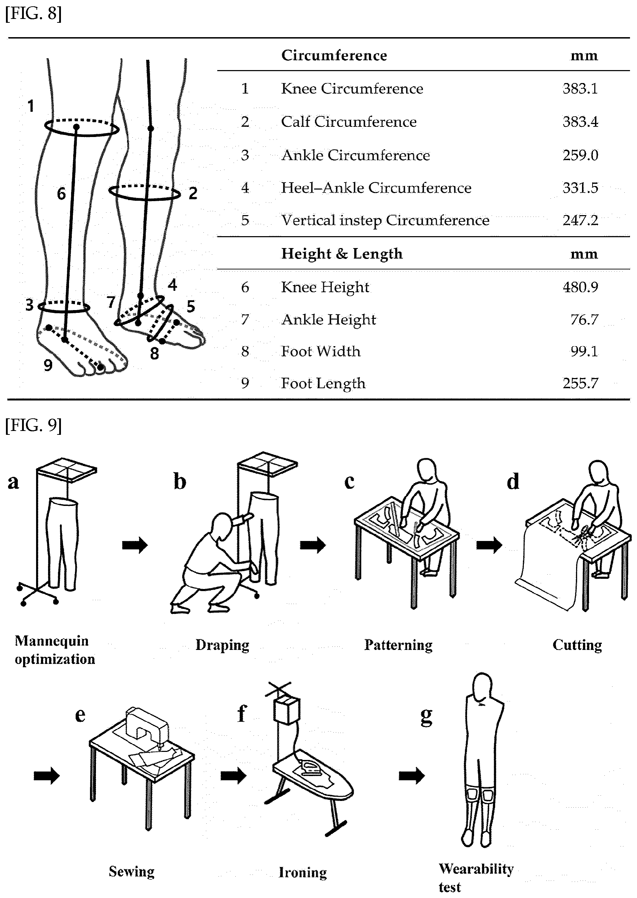

FIG. 8 shows sizes of Korean adult males aged 20-39, measured in size Korea, to reflect the body shape of subjects in their 20s~30s (kneE-XOcks are designed to be thight-fitting, so it is necessary to use accurate measurements to maximize the fit and assistive effect of kneE-XOcks),

FIG. 9 shows a 7-step manufacturing process of kneE-XOcks (After optimizing the mannequin to the target size, each pattern is created using the draping method. The 3 dimensional patterns obtained through this process are converted to flat patterns, and then the appropriate pieces of fabric are cut out for each pattern. The pieces of fabric are sewn together to form a sing garment, and then finishing touches such as ironing are done. Finally, kneE-XOcks are completed by reflecting the feedback obtained through the wearability test),

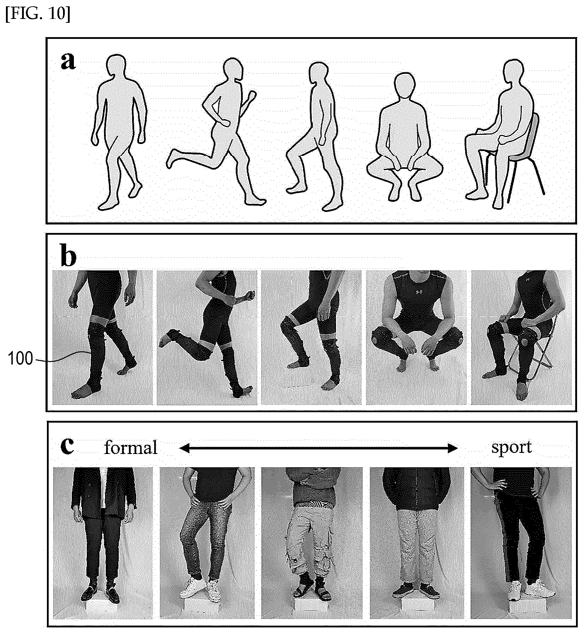

FIG. 10 shows wearing photos of kneE-XOcks according to an embodiment of the present disclosure in daily life movements (The lighter and simper design of the kneE-XOcks can be a huge advantages in daily life. Various movement tests and various types of garment tests show that wearing kneE-XOcks does not interfere with daily life movement performance and it not limited to any type of garment),

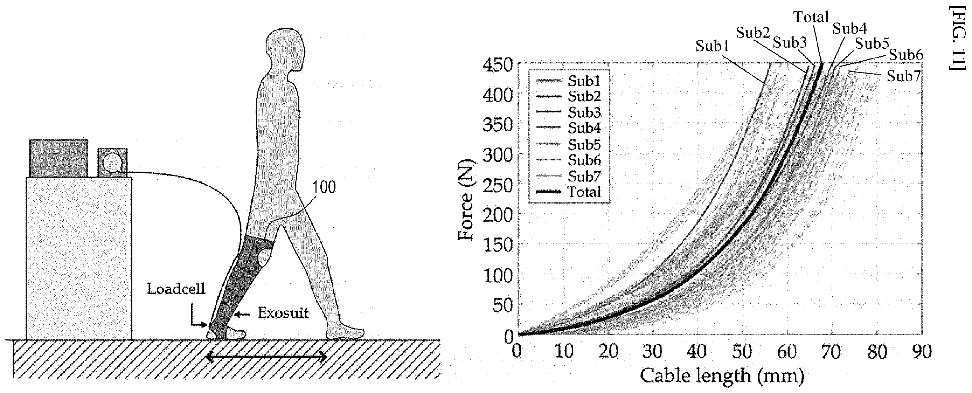

FIG. 11 shows a stiffness test of kneE-XOcks in static posture according to an embodiment of the present disclosure (As an ankle exosuit, the most important function of the kneE-XOcks is to transmit force to the body. The test shows that kneE-XOcks can transmit force to the body without significant deformation), and

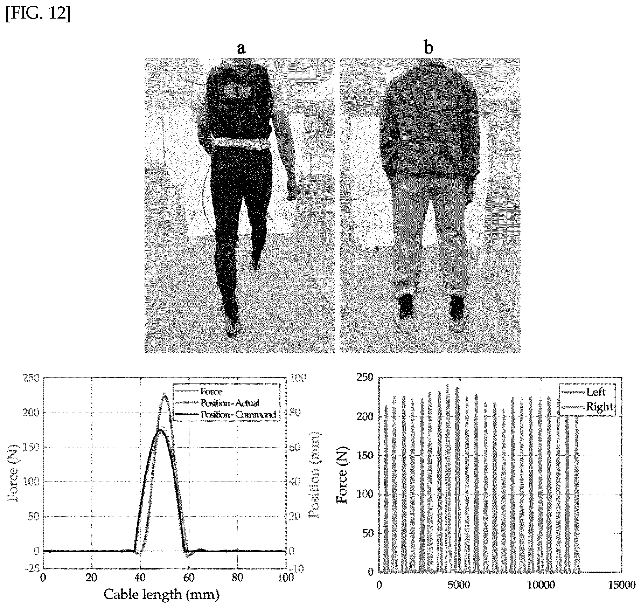

FIG. 12 shows (a) a walking test in combination with a mobile actuator, which can prove the benefits of the lighter and simpler design of kneE-XOcks, and (b) the kneE-XOcks can be worn under ordinary clothes and operated without any difficulty. Result graphs show that the kneE-XOcks can work as an ankle exosuit without any problems even when combined with the mobile actuator).

DETAILED DESCRIPTION

Best Mode

Hereinafter, a biomimetic lightweight wearable suit and wearable suite design method according to an embodiment of the present disclosure will be described.

According to an embodiment of the present disclosure, an exosuit is provided that can be worn by everybody under various environments. An exosuit (kneE-XOcks) 100 according to an embodiment of the present disclosure is designed to have a shape similar to knee-high socks to softly cover anatomical area from the knee to the ankle.

As a result, the kneE-XOcks, as shown in FIG. 2, has a smaller and soft design than the existing ankle exosuit. The design pattern of the kneE-XOcks is based on the anatomy of muscles, ligaments and tendons and is placed on the ankle-foot complex and knee joint (See FIG. 6). Further, a hybrid patterning technique was applied that utilizes a combination of fabrics with various characteristics, taking account of the characteristic differences of muscles, ligaments and tendons (See FIG. 7). Hybrid patterning technique enables to mitigate the deformation of the exsosuit due to lighter and simpler structure than existing ankle exosuits.

Further, the compact design of the kneE-XOcks allows it to be worn with a variety of clothing, such as pants and shoes (See FIG. 10).

Hereinafter, as an embodiment of the present disclosure, 1) the anatomical structure of the human leg and the function of each region thereof is described; 2) the design of kneE-XOcks that was inspired from the anatomical structure of the human leg is described; 3) based on the design pattern, the fabrication of kneE-XOcks prototypes according to an embodiment of the present disclosure is described, and particularly the fabric and manufacturing process are described; 4) the performance and strength of the kneE-XOcks according to an embodiment of the present disclosure is evaluated through prototype tests of wearability, body protection suit stiffness and mobile operation; and 5) lastly, the evaluated performance is compared with other state-of the art exosuit, and conclusion and contribution of the present disclosure are summarized.

First, the anatomy and functions of the human leg will be explained. Human bipedalism has evolved over thousands of years. As a result, an anatomical structure optimized for bipedal locomotion was developed, which can efficiently transmit force within the musculoskeletal system composed of muscles, tendons and ligaments from the knee to the ankle. A locomotor system, which is composed of 11 joints in the pelvis and lower limbs, accounts for only 30% of the body weight, but supports and moves the remaining 70%. Furthermore, this performs a variety of roles including propulsion, shock absorption, posture stability, energy conservation and the like.

The main anatomical entities related to force transmission in humans are bones, skeletal muscles, tendons, ligaments and retinacula. The main function thereof transmits the force generated by the contraction of skeletal muscles to bones and other structures, thereby causing them to move. The bone is a type of connective tissue that forms the majority of the skeleton. The muscle is made up of muscle cells that serve to make movement and maintain posture. The tendon makes muscles attached to bones and is very strong. The ligament is a type of connective tissue that connects bones to other bones, provides stability to joints, alternatively limiting motion and prevents certain movements. Lastly, the retinaculum serves to fix tendons to each position, thereby stabilizing the tendons.

A new ankle exosuit was designed inspired by these elements. The respective body elements were reproduced using fabrics and clothing accessories that matched respective characteristics thereof. Particularly, kneE-XOcks were manufactured with inspiration from the element related to the gastrocnemius muscle, which is one of the most active muscles during ankle movement. In the human anatomy, the gastrocnemius muscle is activated during the transition from terminal stance to pre-swing phase, which generates ankle plantar flexion to move the body forward (See FIG. 4). Studies were performed on the functions of muscles, tendons and ligaments, and bone structure during this gait cycle, resulting in construction of a bio-inspired design pattern of the kneE-XOcks that supports ankle joint motion (See FIG. 6).

In an embodiment of the present disclosure, it is theorized that the ankle exosuit would have a lighter and simpler design than other wearable devices by emulating this structure based on the human anatomy evolved over millions of years.

Description of Embodiments

Hereinafter, a biomimetic design pattern for an ankle exosuit (kneE-XOck) 100 according to an embodiment of the present disclosure will be described.

Firstly, when explaining the essential characteristic of the ankle exosuit, this should be slim, compact and comfortable since it is intended for daily wear. It should also have a low-profile design. In terms of these characteristics, Harvard University's ankle exosuit is considered as a state-of the art ankle exosuit. However, additional waist belts are required in order to provide anchor points that prevent the exosuit from slipping and support the reaction force of the assistive force. This results in increases in the volume of a design.

As the weight and volume increase, the overall structure becomes more complex, making it difficult to put on and take off the ankle exosuit. Therefore, it is not practical for everyday use. The embodiment of the present disclosure aims to make a design slimmer and more compact by eliminating the need for separate waist belts in order to implement the ankle exosuit that can be casually worn in daily life. In the embodiment of the present disclosure, a knee anchor point 21 is selected to replace the motion of a waist anchor. In accordance with this alternative, a new kneE-XOcks design pattern was developed (See FIG. 5).

Secondly, kneE-XOcks should not be easily deformed when the assistive force is applied. The deformation can reduce the force capability and cause loss of force transmission. Particularly, the kneE-XOcks 100 should be designed to support the force transmitted upward along the calf at an anchor point 22 of the ankle and wrap around the heel.

At the same time, this should not interfere in the wearer's movement. The kneE-XOcks 100 were designed to wrap around the ankle, so range of motion (ROM) is a important consideration for comfort movement when wearing the kneE-XOcks. In the case of the ankle joint, the most important movements are plantar flexion/dorsiflexion in the sagittal plane, abduction/adduction on the transverse plane and adduction/eversion in the frontal lobe.

The ankle creates 3 dimensional body movements called supination and pronation based on the combination of these movements. These movements occur within a certain ROM. On average, adult males aged 21 to 39 have a range of 35.3° and 38.1° in plantar flexion and dorsiflexion, respectively, in the sagittal plane. In the frontal lobe, they have ranges of 34.6° and 37.5° in adduction and abduction, respectively. In the transverse plane, the average ROM is 75.9 $\pm$ 4.1°(60.1°~107.7°). The exosuit should be designed to move freely within these areas taking into account the range of movements.

The requirements for the kneE-XOcks 100 are as follows. To maintain the advantages of the exsosuit, it should be light and have a simple structure. At the same time, for efficient force transmission, the deformation should be small. Further, in order to be easy to use in daily life, there should no restrictions on the clothing that users can wear, such as pants, shoes and the like.

Hereinafter, the biomimetic methodology for the design pattern according to an embodiment of the present disclosure will be explained.

The kneE-XOcks 100 were inspired by the human anatomical parts related to walking (muscles, tendons, ligaments and retinacula). It aims to reproduce human anatomical functions by mimicking the shapes, functions, structures and material characteristics of the human anatomical structure. However, it is impossible to accurately mimic the shape of the human anatomical structure, so the components that are most suitable for the exosuit by drawing inspiration from the functions thereof (See FIG. 6).

A suit portion 10, corresponding to the overall design of the kneE-XOcks 100, covers a body region from the knee to the sole of the foot in three dimensions and has the shape similar to knee-high socks or stockings (See FIG. 5). The suit portion 10 has an opening for the heel 12 and an opening for the knee 11.

There are three main considerations in pattern design, that is, force transmission, anchor points and garment assembly pattern. A force transmission pattern portion 30 transmits the force of a protection suit, while an anchor point portion 20 helps to the force to act at the appropriate position (See FIG. 6). Lastly, careful fabric selection plays a role in combining all of the elements of the kneE-XOcks into one complete garment that can effectively perform functions thereof. The bio-inspired components of the kneE-XOcks are mainly related to the force transmission pattern design that transmits assistive forces that enable the operation of the exosuit and the anchor points that enable these forces to act at the appropriate positions.

The force transmission pattern portion 30 mimics the gastrocnemius muscle, and is thus related to the occurrence of a plantar flexion moment in the ankle. The gastrocnemius muscle is the most superficial muscle in the posterior compartment and the largest muscle in the leg. This is composed of a medial head, which is attached to the surface between the adductor tubercle and the medial femur and a lateral head, which is attached to the surface of the lateral femur. The two top ends are combined together and then connected to the calcaneus tendon that is attached to the heel (See FIG. 6). This type of gastrocnemius muscle is contracted by the tibial nerve, which acts as plantar flexion or bends the leg at a knee point. The force transmission pattern portion 30 was manufactured in a Y-shaped pattern that starts at the back of the knee and extends along the calf to the ankle (See FIG. 6). Due to the shape that is bio-inspired, this transmits forces to the ankle joint, bends the knee naturally and effectively support plantar flexion. This Y-shaped pattern of the force transmission pattern portion 30 is composed of a connection portion 31 that is connected to an ankle anchor point 22 and aligned along the calf in a length direction and a strap 32 that is connected to the top end of this connection portion 31 and wraps around the top end of the knee. Further, this includes a fixation support 40 that is connected to both ends of the lower side of the connection portion 31 of the force transmission pattern portion 30 and wraps around and fixes the ankle.

For the effective operation of the force transmission pattern portion 30 to directly mimic the gastrocnemius muscle, the role of the anchor point portion 20 including the knee and ankle anchor points is essential. The knee anchor point 21, in the two anchor points, is fixed around the knee. It catches a downward pulling force during walking and prevents the suit from slipping. Another anchor point, the ankle anchor point 22, is fixed around the sole of the foot and the ankle. It prevents the suit from being forcibly removed.

The knee anchor point 21 mimics the ligament around the patella of a knee joint. The patella is surrounded by the patella ligament and the lateral collateral ligament. The patella ligament is a continuation of the quadriceps tendon below the patella and the lateral collateral ligament. It is present on both sides of the knee joint and stabilizes a hinge-like movement of the knee. The knee anchor point was designed by mimicking the ligament surrounding the patella in an O-shaped pattern to play a role of the anchor point without interfering with bending of the knee (See FIG. 7). The front of the knee anchor point, which directly receives force that occurs in the force transmission pattern portion 30, used Dyneema fabric to minimize deformation. The back of the knee anchor point is a part where the clothes and skin come into contact with each other a lot when the knee is bent. Therefore, it was made of a moisture-wicking fabric to increase the convenience of wearing.

The ankle anchor point 22 mimics the retinacula and ligament of the ankle joint. Several bone pieces of the ankle joint are fixed and stabilized by the medial and lateral ligaments, while two extensor retinacula bind tendons of the extensor muscles to the ankle region and prevent the tendons from bending when the foot and toes are extended. The ankle joint has several ligaments and retinacula, which surround the ankle like an ankle brace with a hole in the heel (See FIG. 7). The ankle anchor point 22 designed to mimic this shape, is made of a variety of materials that smoothly surround the ankle and plays a role as the anchor point without interfering with the wide range of movement that occurs in the ankle joint. This anchor point also needs to have a stiffness that withstands an upward pulling force that occurs in the force transmission portion, so Dyneema fabric was used to minimize deformation.

Each pattern, corresponding to each body region, used materials with corresponding properties to enhance advantages and overcome disadvantages. For example, the suit portion 10 that covers the body mainly uses a stretchable fabric with flexibility and elasticity, so it is possible to move without interfering with the muscles. In contrast, the force transmission pattern portion 30 of the suite uses a very stiff fabric to increase the transmission of force. The ligament-mimicking part is made of very stiff materials such as straps that act as retinacula. These are not easily deformed by the muscles and forces that act on the suit. Lastly, the tendon- and retinaculum-mimicking parts, composed of materials such as elastic rubber bands or bias webbing, enhance stability by combining high stiff materials together without interfering with the movement of the ankle (See FIG. 7).

The human anatomical structure-mimicking components affect the wearability of the kneE-XOcks, so each component should be connected to the garment to effectively activate functions of each component and prevent the suit from distorting or allowing unintended movements. A consideration for this wearability results in composing a base layer made of a soft and elastic fabric to increase the wearer's convenience, and a fixing layer made of a fabric that is moderately soft but high-stiff to ensure the stiffness of the garment. The kneE-XOcks are composed only of a part that extends from the knee to the ankle, unlike other exosuits that ensure stability by a joint that extends to the buttocks.

Accordingly, it is inevitably susceptible to slipping effect in the suit. Therefore, fixability of the suit in fixation is ensured by using two types of fixing layers made of straps or the rubber bands. Such fixing layers of this kind include a knee fixing layer that fixes the strap wrapping the ends of the femur and the patella with a leather lock, and an arch fixing layer that covers the back of the ankle at the arch.

These fixing layers support the arch and prevent the suit from unintendedly coming off, even during intense movements of the ankle. The fixing layers include Velcro, allowing for a size adjustment of the suite according to the wearer. Further, through the draping technique, it reflects curves of the human body, increasing the transmission of force that occurs in the suite without interfering with the body movements. Based on this, all parts of the kneE-XOcks maintain their individual characteristics and are assembled as one garment to achieve high completeness.

Hereinafter, the fabrication of a kneE-XOcks prototype according to an embodiment of the present disclosure will be explained.

The overall configuration of the kneE-XOcks is based on a fabric and it is essential to enhance advantages and compensate for disadvantages by using fabrics and auxiliary materials that are suitable for characteristics of each part. For this, the kneE-XOcks 100 are manufactured using 4 types of fabrics with inherent characteristics, 3 types of fabrics of auxiliary materials and 3 types of auxiliary materials.

The fabrics included Dyneema, Cordura, Coolmax and 3D-mesh. Fabrics of auxiliary materials were composed of rubber bands, webbing straps and bias webbing. The auxiliary materials included cobra buckles, leather locks and Velcro (See Table 1).

Dyneema fabric is the core fabric used in the kneE-XOcks, which is 15 times stronger than steel fiber of the same weight and 45% lighter than aramid fiber (which is mainly used in bulletproof vests but is more flexible). As shown in FIG. 7, Dyneema was used together with webbing or a cobra buckle in places where strong supports of, for example, the force transmission pattern and anchor point components are needed.

However, Dyneema has several limitations, so it should be properly combined with a fabric that can play a supporting role. Dyneema has a rough and stiff surface, which can cause discomfort when it comes into direct contact with the wearer's skin. Therefore, Cordura fabric, which is more comfort to wear than Dyneema and has some stiffness, high breathability, and drying speed, was used as the lining under the Dyneema.

Further, a mesh pad of 3D structure is attached to the inside of Dyneema (that is, in the force transmission pattern portion) to prevent the skin from being scraped by a movement of a wire according to the operation of a moment. In addition, a webbing strap with Velcro is attached to a two-branched part of a penetration pattern to minimize errors in the position of force transmission or the degree of tightness of the garment due to differences in body size, such as the circumference of the knee or thigh. The use of the webbing strap makes it easy to adjust the size without the need for external assistance, which is difficult to do with Dyneema material alone.

If Dyneema is the skeleton of kneE-XOcks, then Coolmax is the flesh that connects the components. Coolmax fabric is made of stretchy knit and a fiber having a wide cross-sectional surface. Therefore, this provides quick drying and comfort to the wearer. Coolmax used in the base layer of the kneE-XOcks enhances the finish of the kneE-XOcks.

Finally, a rubber band with elasticity forms the fixing layer to reduce deformation of the garment and prevents unintended slipping. This fixing layer is also attached with Velcro or leather buckles to allow the wearer to control the degree of pressure by adjusting tension (See FIG. 7).

As shown in Table 1, each pattern of the kneE-XOcks used fabrics and materials that are compatible with human anatomical characteristics, aiming to the biomimetic pattern design. High-stiff fabrics and materials such as Dyneema, Cordura or webbing are used to transmit forces and support patterns. The patterns that consider the wearer's comfort are applied using fabrics or materials such as breathable Coolmax or rubber bands.

[Table 1]

| | DYNEEMA | CORDURA | COOLMAX | 3D-MESH 3 mm | RUBBER BAND | STRAP WEBBING | BIAS WEBBING |
|---|---|---|---|---|---|---|---|
| Fabric weight | 109 g/m$^2$ Wale: | 121 g/m$^2$ Wale: | 136 g/m$^2$ Wale: | 755 g/m$^2$ Wale: | 927 g/m2 | 766 g/m$^2$ | 371 g/m$^2$ |
| Tensile strength | 1800 N/5 cm Course: 1600 N/5 cm | 1500 N/5 cm Course: 910 N/5 cm | 330 N/5 cm Course: 210 N/5 cm | 1300 N/5 cm Course: 1100 N/5 cm | 1300 N/5 cm | 2700 N/5 cm | 1800 N/5 cm |
| Tearing strength | Wale: 49 N Course: 72 N | Wale: 73 N Course: 49 N | Wale: 25 N Course: 15 N | Wale: 190 N Course: 180 N | N/A | N/A | N/A |
| Bursting strength | No burst (max 2060 kPa) | 1700 kPa | 530 kPa | No burst (max 2060 kPa) | N/A | N/A | N/A |
| Abrasion resistance | Over 20,000 Rubs | Over 20,000 Rubs | Over 20,000 Rubs | Over 20,000 Rubs | N/A | N/A | N/A |
| Water Vapor transmission | Under 30 g/m$^2$ | 1044 g/m$^2$ | 1524 g/m$^2$ | 844 g/m$^2$ | N/A | N/A | N/A |
| Absorbency 100% Dry time | Over 60 s N/A | Over 60 s N/A | 1.0 s 60.7 m in | 1.0 s 39 min | N/A N/A | N/A N/A | N/A N/A |

**EP 4 670 922 A1**

The kneE-XOcks are such a soft exosuit that can be worn as everyday clothing. The first part of the kneE-XOcks manufacturing process is to take the overall shape of the base layer from the knee to the foot. A knee-to-toe region has the widest range of motion and most curves in the body, so the base layer has limitations in smoothly wrapping around the body like socks and making it easy to wear.

2-dimensional (2D) clothing patterns can be enough to be put on and taken off. To complement this, the shape of base layer was manufactured using draping pattern technique, and fabrics compatible with each region were directly fitted to a mannequin body. Based on this, 3D curves of the body can be applied to the 2D clothing pattern. The body size used in this suit refers to the average size of Korean men aged of 20-39 (See FIG. 8). The main body size required for manufacturing the base layer is largely divided into circumference and height.

There are 5 types of circumference: knee circumference, which is across the center of the patella; calf circumference, which is across the bulge in the calf; ankle circumference, which is across the ankle; heel-ankle circumference, which is across the bottom; and vertical instep circumference, which is across the heel, ankle and the instep. There are 4 types of height and length: knee height from the bottom to the top end of the tibia; ankle height from the bottom to the tarsal bone; foot width, that is, horizontal length between the inner points of the foot; and foot length from the feel to the toe. These measurements are applied to draping. For this, a mannequin needs to be adjusted using separate pads or fabrics according to each measurement. The base layer compatible with the average size of Korean men aged of 20-39 was manufactured using this mannequin.

The base layer was manufactured using Coolmax fabric with reference to this size. After the base layer was completed, the force transmission pattern was manufactured using the biomimetic design of the gastrocnemius muscle. To effectively mimic functions of the gastrocnemius muscle, components were placed in corresponding positions of the muscle. Straps acting as the medial and lateral heads of the gastrocnemius muscle were gathered together based on a triangular 3D printout, and then the gathered straps were fixed with a cobra buckle that fixes a wire, which would be operated through an actuator. The cobra buckle fixed to a calcaneus position was connected to a ring through a rectangular piece of a Dyneema material. A pad of 3D mesh was added inside the base layer to prevent the wearer from being injured.

The anchor point of the knee was located at an upper position, and the anchor point of the ankle was located at a lower position, with reference to the position of the force transmission portion. As shown in FIG. (a) of FIG. 3. the anchor points and the force transmission component are connected to the base layer. After connecting all components of the kneE-XOcks, an additional fixing layer is sewn to prevent unintended slipping of the protection suit due to deformation, body movements, or actuator forces. The kneE-XOcks are made of fabrics, so there were wrinkles in the previous process. Therefore, the kneE-XOcks were ironed to remove the wrinkles and given a proper shape. Finally, the kneE-XOcks were completed by applying the feedback from the wear test and making final modifications.

The weight of the patella protection suit including auxiliary materials but the actuator and the wire, manufactured according to an embodiment of the present disclosure was 106.3g. Out of the weight of the kneE-XOcks, the force transmission pattern and the anchor point weight 48g and 40g, respectively. The kneE-XOcks can be worn easily and quickly by inserting the wearer's feet into them, just like putting on socks. After wearing the kneE-XOcks, it is necessary to make sure that the ankle fixing point (starting at the arch of the foot) is in a correction position and then, using Velcro, to adjust the size and secure the fixation.

Next, it is necessary to remove any unnecessary slack and adjust the anchor point of the knee to fit the wearer perfectly, using Velcro on the top of the knee and the calf. It is another way to use a sewing technique compatible with each region for optimizing advantages of the kneE-XOcks. The kneE-XOcks were sewn with an overlocker and a cover stitch to withstand strong tension and prevent tearing more than when manufactured by general sewing. Further, the long seam below the knee anchor point according to this sewing technique acts as a reference check line, regardless of whether the garment is twisted, so that it can be worn stably along the tibia (See (b) of FIG. 5).

The weight of the kneE-XOcks manufactured according to an embodiment of the present disclosure is 106.3g (except the wire and the sensor). In addition, the design allows for the fixation only to the knee and the ankle, and additional components that were located above the knee were eliminated, significantly reducing the volume. The name, kneE-XOcks, is inspired from knee-high socks as one type of the socks. The kneE-XOcks are not significantly different in thickness and volume from those of daily socks, as its name suggests (See FIG. 10). The average time to put on the suit, excluding the driving section, was about 30 seconds per piece. Therefore, 7 subjects, who tried on the kneE-XOcks for the first time, were able to put it on and take it off without any external assistance in wearing, in a similar way to putting on and taking off socks.

The advantages of the kneE-XOcks are not limited to easy and quick donning. As shown in FIG. 10, it has no problem performing a variety of movements required for daily life and there is almost restriction on wearing everyday clothing and shoes. The wearing comfort of the kneE-XOcks was tested on 7 men aged of $25.8\pm1$ with a variety of body sizes (height: $176\pm5$, weight: $71.9\pm6.8$). The performance of the kneE-XOcks was evaluated while performing various movements, such as those shown in FIG. 10. Based on this, it can be seen that wearing the kneE-XOcks does not have a significant impact on daily life.

The ankle exosuit was manufactured, which is easier to wear, more convenient and lighter than existing ankle assistive exosuits but has a similar degree of the stiffness to it. To prove this, a series of tests were performed on the stiffness of the human suit. A soft material-based structure makes it essential to provide a stiffness model to compensate non-linear deformation occurring such when motor force is applied to the kneE-XOcks.

For this, a stiffness test was performed on the 7 subjects wearing the kneE-XOcks (age: $25.8 \pm 1$ years, height: $176 \pm 5$, weight: $71.9 \pm 6.8$), being analyzed for measurement of the stiffness in a static posture. All of the subjects were informed of the purpose, protocol, inclusion/exclusion criteria, and other details of the study, and they gave their consent to participate in the study. The protocol of the study was approved by the Institutional Review Board of Chu-Ang University (1041078-202107-HR-214-01C).

The posture was set as close as possible to the point when the actual assistive motion of the kneE-XOcks occured with respect to the point when the posture changed from terminal posture to the free swing. This corresponds to 31~50% of the gait cycle, which falls in the range where the gastrocnemius muscle is activated maximally. Further, based on the results of measuring the preferred gait of each subject, the subject's feet were placed apart at their stride length (Average preferred walking speed: 1.715cm/s, Average preferred stride length: 0.082m). The speed, preferred stride length, preferred walking speed and stride length were measured over a 40m distance on a flatland, with a 20m section excluding the 10m front and back sections.

In the static posture, a motor (RE50, 200W, Maxon, City, Switzerland) that is combined with a gearhead (GP 62, Maxon, Switzerland) was used to transmit forces to the kneE-XOcks, to which a machined pulley was connected. Bowden cable (ALLIGATOR 31-STRAND INNER CABLE, ALLIGATOR, Taiwan) was connected to the pulley with a cable housing (BHL100, JAGWIRE, Taiwan), which transmitted the power of the motor. The motor was controlled by a motor driver (EPOS 4 70/15, Maxon, Switzerland) and the forces were measured with a load cell (LSB 205, Futek, USA). A control system was designed using a system design platform (LABVIEW, National Instruments, City, State, USA).

FIG. 11 shows stiffness estimation results obtained under the above conditions, that is, the stiffness when a force of up to 450N was applied to the 7 subjects wearing the kneE-XOcks for 10 repetitions. The stiffness model of the human suit was fitted based on the fitting equation proposed by G Lee et al.

Equation 1

$$\delta_{suit} = C_1 \ln(C_2 F + 1)$$

wherein, $C_1$ and $C_2$ are the coefficients of the human suit stiffness model, F is the cable force, and $\delta_{suit}$ is the cable displacement. The average stiffness value of the kneE-XOcks was 21% lower than that of the conventional suit by Bae et al. However, converting this to a stiffness value for the suit weight show that it is 5 times stiffer.

To validate the actual force transmission performance of the kneE-XOcks in a walking situation, as well as to gauge the completeness of the suit as a garment under motorized force, preliminary mobile testing was performed on a treadmill with wearing knee joint- XOcks using a customized mobile actuator. The subject with the highest result in the stiffness test in the human suit was selected.

The subject (Age: 26 years, Height: 175cm, Weight: 73kg) wore the kneE-XOcks and performed a gait test on the treadmill at the subject's preferred walking speed (1.25m/s). The test was performed through a mobile system as shown in FIG. 10. A motor (PEQDD) connected with a gearhead (GP 32, Maxon, Switzerland) was used to apply forces to the kneE-XOcks. A pulley was connected to the motor. Bowden cable (ALLIGATOR 31-STRAND INNER CABLE, ALLIGATOR, Taiwan) was used with a cable housing (BHL100, JAGWIRE, Taiwan) and is connected to the pulley that transmits the forces.

The overall control system for the test included a real-time controller (Com-pactRIO, National Instruments, USA) and a system design platform (LABVIEW, National Instruments, USA). The motor was controlled by EtherCAT communications using a motor driver (Gold Solo Twitter 10/100, Elmo Motion Control, Israel). The force transmitted to the kneE-XOcks was measured using a load cell (LSB 205, Futek, USA).

The total weight of an actuation system used in the test is 2.74kg. Out of the weight of the actuation system, the cable and sensor used for transmitting and controlling an assistive force weight 226g. The inventors of the present disclosure have developed the actuation system in-house and plan to reduce its volume and weight through further development and refinement.

The kneE-XOcks have the advantage of being lighter and simpler than conventional exosuits, which is best demonstrated through the gait test in combination with mobile actuators. Previous gait test has shown that the kneE-XOcks can operate without catastrophic deformation when the wearer is moving and can be combined with mobile actuators without issues.

In an embodiment of the present disclosure, a new type of ankle exosuit, kneE-XOcks, was manufactured by applying a bio-inspired pattern-based design method, and an improved stiffness/weight ratio compared to that of existing ankle exosuits was verified. Biomimetic patterns and a manufacturing method based on human anatomy effectively reduce the weight and volume of the kneE-XOcks compared to the existing ankle exosuits, making it more wearable with maintaining the supportive benefits of the exosuit.

In an embodiment of the present disclosure, performance testing and validation of the kneE-XOcks were performed using a tethering system. As shown in FIG. 12, the aim of the kneE-XOcks to produce an easy-to-wear ankle exosuit similar to underwear was achieved based on its combination with the mobile actuation system.

**Claims**

1. A biomimetic lightweight wearable suite comprising:

   a suit portion that covers a body region from the knee to the sole of the foot;
   a force transmission pattern portion that surrounds around joints and muscles by mimicking a tendon to disperse a force of an actuator to a garment and a body; and
   an anchor point portion that is designed to surround a joint by mimicking a ligament.

2. The biomimetic lightweight wearable suite of claim 1, wherein
   the force transmission pattern portion is made of an inelastic material.

3. The biomimetic lightweight wearable suite of claim 2, wherein
   the suit portion has an opening for the knee and possesses flexibility and elasticity.

4. The biomimetic lightweight wearable suite of claim 3, wherein
   the suit portion comprises an opening for a heel, covers the body region from the knee to the sole of the foot and has a form such as knee-high socks or stockings.

5. The biomimetic lightweight wearable suite of claim 4, wherein
   the force transmission pattern portion has a Y-shaped pattern that starts at the back of the knee and extends along the calf to an ankle.

6. The biomimetic lightweight wearable suite of claim 5, wherein
   the anchor point portion comprises a knee anchor point that is fixed around the knee to catch a downward pulling force during walking and prevent the suit portion from slipping.

7. The biomimetic lightweight wearable suite of claim 6, wherein
   the anchor point portion further comprises an ankle anchor point that is fixed around the sole of the foot and the ankle to prevent the suit portion from being forcibly removed.

8. The biomimetic lightweight wearable suite of claim 7, wherein
   the anchor point portion is made of an inelastic material.

9. The biomimetic lightweight wearable suite of claim 8, wherein
   the force transmission pattern portion further comprises a fixation support that is connected to both ends at one side to wrap and fix the ankle.

10. The biomimetic lightweight wearable suite of claim 9, wherein
    the force transmission pattern portion comprises a connection portion that is aligned along the calf in a length direction, and a strap that is connected to a top end of the connection portion to wrap a top end of the knee.

11. A wearable suit design method comprising steps of:

    designing a suit portion that covers a body region from the knee to the sole of the foot and possesses flexibility and elasticity;
    designing a force transmission pattern portion that is made of an inelastic material and surrounds around joints and muscles by mimicking a tendon to disperse a force of an actuator to a garment and a body; and
    designing an anchor point portion that is made of an inelastic material and designed to surround a joint by mimicking a ligament.

12. The wearable suit design method of claim 11, wherein
the suit portion is designed to comprise an opening for a heel, cover the body region from the knee to the sole of the foot three dimensionally and have a form such as knee-high socks or stockings.

13. The wearable suit design method of claim 12, wherein
the force transmission pattern portion is designed to have a Y-shaped pattern that start at the back of the knee and extends along the calf to an ankle.

14. The wearable suit design method of claim 13, wherein
the anchor point portion is designed to have a knee anchor point that is fixed around the knee to catch a downward pulling force during walking and prevent the suit portion from slipping and an ankle anchor point that is fixed around the sole of the foot and the ankle to prevent the suit portion from being forcibly removed.

15. The wearable suit design method of claim 14, wherein
the knee anchor point is designed to directly receive a force generated from the force transmission pattern portion and have a front side made of an inelastic material.

16. The wearable suit design method of claim 15, wherein
the ankle anchor point is designed to wrap the ankle, serve as an anchor point without interfering with movement that occurs in an ankle joint and possess a stiffness that withstands an upward pulling force generated from the force transmission pattern portion.

[FIG. 1]

[FIG. 2]

[FIG. 3]

EP 4 670 922 A1

| a. Sawicki, et al | b. Collins, et al | c. Quinlivan, et al | d. J Chen, et al |
|---|---|---|---|
| | | | |
| Exoskeleton type | Exoskeleton type | Exosuit type | Exoskeleton type |
| ▶ Pneumatic driven<br><br>▶ Calf & foot plates<br><br>▶ Using hard materials to secure fixation power in the calf | ▶ Spring & clutch passive driven<br><br>▶ Calf & foot plates<br><br>▶ Using hard materials to secure fixation power in the calf | ▶ Cable driven<br><br>▶ Waist & Calf components<br><br>▶ Adding a waist belt to secure fixation power | ▶ Cable driven<br><br>▶ Waist & Calf components<br><br>▶ Switchable configurations actuation system which can alter between single and dual motor |

| e. Wehner, et al | f. J Bae, et al | g. Y Park, et al | h. S Lee, et al |
|---|---|---|---|
| | | | |
| Exosuit type | Exosuit type | Exosuit type | Exosuit type |
| ▶ Pneumatic driven<br><br>▶ Waist & Knee & Calf components<br><br>▶ Adding anchor points to secure fixation power | ▶ Cable driven<br><br>▶ Calf & foot components<br><br>▶ Using hard materials to secure fixation power in the calf | ▶ Pneumatic driven<br><br>▶ Manufacture of a pneumatic actuator with a design that mimics the shape and function of muslce | ▶ Cable driven<br><br>▶ Muscle-based assistance strategy wherein the exosuit assistance was derived from direct measurements of soleus muscle dynamics |

16

[FIG. 4]

[FIG. 5]

Front　　Side　　Back

[FIG. 6]

Patella ligament

Collateral ligament

Gastrocnemius

Ankle anchor point

3D printout

Cobra buckle

Calcaneus ring

Ankle retinacula

Calcaneus ligament

Knee & Ankle anchor point pattern

Force transmission pattern

[FIG. 7]

[FIG. 8]

| | Circumference | mm |
|---|---|---|
| 1 | Knee Circumference | 383.1 |
| 2 | Calf Circumference | 383.4 |
| 3 | Ankle Circumference | 259.0 |
| 4 | Heel–Ankle Circumference | 331.5 |
| 5 | Vertical instep Circumference | 247.2 |
| | **Height & Length** | **mm** |
| 6 | Knee Height | 480.9 |
| 7 | Ankle Height | 76.7 |
| 8 | Foot Width | 99.1 |
| 9 | Foot Length | 255.7 |

[FIG. 9]

| Mannequin optimization | Draping | Patterning | Cutting |

| Sewing | Ironing | Wearability test |

[FIG. 10]

[FIG. 11]

[FIG. 12]

## INTERNATIONAL SEARCH REPORT

| International application No. |
| --- |
| **PCT/KR2023/008645** |

| | |
| --- | --- |
| **A.** | **CLASSIFICATION OF SUBJECT MATTER** |
| | **B25J 9/00**(2006.01)i; **A61H 1/02**(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

B25J 9/00(2006.01); A41D 13/00(2006.01); A41D 13/05(2006.01); A41D 13/06(2006.01); A41D 27/12(2006.01); A61H 1/02(2006.01); A61H 3/00(2006.01); B25J 9/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유연(soft), 웨어러블(wearable), 엑소수트(exosuit), 무릎(knee), 발목(ankle), 인대 (ligament)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | KR 10-2019-0103263 A (ETH ZURICH) 04 September 2019 (2019-09-04)<br>See paragraphs [0129], [0130], [0142], [0149], [0152] and [0158] and figure 1. | 1-16 |
| Y | JP 2020-059938 A (WASEDA UNIV et al.) 16 April 2020 (2020-04-16)<br>See paragraphs [0098] and [0099] and figure 1. | 1-16 |
| Y | JP 2008-050705 A (ALCARE CO., LTD.) 06 March 2008 (2008-03-06)<br>See paragraphs [0009], [0014] and [0017] and figures 1 and 2. | 4-16 |
| Y | KR 10-2063257 B1 (DAEGU GYEONGBUK INSTITUTE OF SCIENCE AND TECHNOLOGY) 07 January 2020 (2020-01-07)<br>See paragraphs [0076], [0091], [0100], [0101], [0110]-[0112] and [0114] and figures 5-7, 11 and 13. | 5-10,13-16 |
| Y | KR 10-2019-0111716 A (KOLON INDUSTRIES, INC. et al.) 02 October 2019 (2019-10-02)<br>See paragraphs [0068] and [0069] and figures 1-3. | 10 |

| ☑ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 May 2024** | **30 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/008645** |

### C.    DOCUMENTS CONSIDERED TO BE RELEVANT

| Category* | Citation of document, with indication, where appropriate, of the relevant passages | Relevant to claim No. |
|---|---|---|
| X | PARK et al. Lighter and simpler design paradigm for widespread use of ankle exosuits based on bio-inspired patterns. Biomimetics. 29 September 2022, Vol. 7, No. 4, pp. 1-18.<br>See pages 1-18.<br>※ This document is a document declaring exceptions to lack of novelty in an earlier application that serves as a basis for claiming priority of the present international application. | 1-16 |

Form PCT/ISA/210 (second sheet) (July 2022)

**INTERNATIONAL SEARCH REPORT**
Information on patent family members

International application No.

**PCT/KR2023/008645**

| Patent document cited in search report | | | Publication date (day/month/year) | Patent family member(s) | | | Publication date (day/month/year) |
|---|---|---|---|---|---|---|---|
| KR | 10-2019-0103263 | A | 04 September 2019 | CN | 110352050 | A | 18 October 2019 |
| | | | | EP | 3342390 | A1 | 04 July 2018 |
| | | | | EP | 3562458 | A1 | 06 November 2019 |
| | | | | EP | 3562458 | B1 | 18 May 2022 |
| | | | | EP | 3701927 | A1 | 02 September 2020 |
| | | | | EP | 3701927 | B1 | 22 June 2022 |
| | | | | ES | 2915565 | T3 | 23 June 2022 |
| | | | | ES | 2925853 | T3 | 20 October 2022 |
| | | | | JP | 2020-518295 | A | 25 June 2020 |
| | | | | JP | 2022-110014 | A | 28 July 2022 |
| | | | | JP | 7345840 | B2 | 19 September 2023 |
| | | | | JP | 7362159 | B2 | 17 October 2023 |
| | | | | KR | 10-2617942 | B1 | 27 December 2023 |
| | | | | US | 11883343 | B2 | 30 January 2024 |
| | | | | US | 2019-0343707 | A1 | 14 November 2019 |
| | | | | WO | 2018-122106 | A1 | 05 July 2018 |
| JP | 2020-059938 | A | 16 April 2020 | JP | 6527629 | B1 | 05 June 2019 |
| | | | | WO | 2020-075354 | A1 | 16 April 2020 |
| JP | 2008-050705 | A | 06 March 2008 | JP | 4590529 | B2 | 01 December 2010 |
| KR | 10-2063257 | B1 | 07 January 2020 | US | 11331240 | B2 | 17 May 2022 |
| | | | | US | 2020-0022864 | A1 | 23 January 2020 |
| KR | 10-2019-0111716 | A | 02 October 2019 | KR | 10-2346014 | B1 | 03 January 2022 |

Form PCT/ISA/210 (patent family annex) (July 2022)

26